(19) Europäisches Patentamt
European Patent Office
Office européen des brevets

(11) **EP 1 966 777 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(21) Anmeldenummer: **06841286.5**

(22) Anmeldetag: **06.12.2006**

(51) Int Cl.:
**G08C 19/02** (2006.01)

(86) Internationale Anmeldenummer:
**PCT/EP2006/069367**

(87) Internationale Veröffentlichungsnummer:
**WO 2007/077085 (12.07.2007 Gazette 2007/28)**

(54) **VERFAHREN ZUR INBETRIEBNAHME UND/ODER ZUM BETRIEB EINES KOMMUNIKATIONSSYSTEMS**

METHOD FOR COMMISSIONING AND/OR OPERATING A COMMUNICATION SYSTEM

PROCEDE DE MISE EN SERVICE ET/OU D'UTILISATION D'UN SYSTEME DE COMMUNICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.12.2005 DE 102005063149**
**24.03.2006 DE 102006014102**

(43) Veröffentlichungstag der Anmeldung:
**10.09.2008 Patentblatt 2008/37**

(73) Patentinhaber: **Endress + Hauser GmbH + Co. KG**
**79689 Maulburg (DE)**

(72) Erfinder:
• **SPANKE, Dietmar**
**79585 Steinen (DE)**

• **LINK, Martin**
**79291 Merdingen (DE)**
• **HEIM, Michael**
**79688 Hausen (DE)**

(74) Vertreter: **Andres, Angelika Maria**
**Endress+Hauser(DE)Holding,**
**Patserve,**
**Colmarer Strasse 6**
**79576 Weil am Rhein (DE)**

(56) Entgegenhaltungen:
**EP-A2- 0 591 926          GB-A- 2 173 330**
**US-A1- 4 520 488          US-A1- 5 469 746**
**US-B1- 6 601 005**

EP 1 966 777 B1

**Beschreibung**

Die Erfindung betrifft ein Verfahren zur Inbetriebnahme und/oder zum Betrieb eines Kommunikationssystems bestehend aus zumindest einem multivariablen Sensor, aus zumindest einer Konvertereinheit und aus zumindest einer Empfangseinheit, die über eine Zweidrahtleitung miteinander verbunden sind.

Im Bereich der Automations- und Prozesssteuerungstechnik ist es allgemein gültig, dass die Einzelkomponenten eines Prozessautomatisierungssystems einer örtlichen Verteilung in der Prozessanlage unterliegen, was ein Kommunikationssystem zum Austausch von Informationen zwischen den Einzelkomponenten und/oder einer Leitstelle erforderlich macht. Diese Kommunikationssysteme für die Prozessautomatisierungstechnik müssen hohen technischen Anforderungen, wie z.B. Schnittstellenstandardisierung, Ex-Schutz, Informationssicherheit, Ausfallsicherheit, Echtzeitanwendungen, einfacher Installationsaufwand und variable Netztopologie erfüllen. Unter diesen Gesichtspunkten haben sich neben den konventionellen analogen Feldgeräten mit standardisierten, unidirektionalen 420 mA-Stromsignalausgängen heutzutage auch eine Vielzahl leistungsfähigerer Feldgeräte mit erweiterten digitalen Kommunikationsmöglichkeiten durchgesetzt. Um eine einfache Integration dieser leistungsfähigeren Feldgeräte in bestehende Anlagen mit 420 mA Kommunikation zu ermöglichen, hat sich als Verfahren durchgesetzt, dass auf das 420 mA Stromsignal ein digitalisiertes, hochfrequentes Signal als weiterer Informationsträger aufmoduliert wird. Vor allem der HART-Standard (HART = Highway Addressable Remote Transducer) zur bidirektionalen Kommunikation zwischen den einzelnen Feldkomponenten mit Hilfe von digitalen Signalen hat sich hier als ein allgemein gültiger Standard etabliert. Durch das HART-Protokoll, welches gemäß dem Bell 202-Kommunikationsstandard nach dem FSK-Verfahren (FSK = Frequency Shift Key) arbeitet, steht neben einer unidirektionalen Datenübertragung durch das 420 mA Stromsignal eine zusätzliche bidirektionale Datenübertragung zur wechselseitigen Kommunikation zwischen beispielsweise einem Feldgerät und einer Leitstelle zu Verfügung. Durch das zusätzliche HART-Signal ist beispielsweise die Möglichkeit einer einfacheren Parametrisierung und auch einer Diagnose von Feldgeräten durch den Austausch von Statusmeldungen geschaffen worden.

Durch das Hinzufügen von "Intelligenz" in die Messgeräte in Form von beispielsweise einem Mikroprozessor sind multivariable Sensoren möglich, die neben dem Hauptmesswert noch weitere Nebenmesswerte ermitteln, sowie Diagnose- und Analysefunktionen durchführen können. Beispiele für multivariable Sensoren sind, Durchfluss und Viskosität als Messgrößen mit einem einzigen Coriolis-Durchflusssensor aufzunehmen oder Differenzdruck, Absolutdruck und Prozesstemperatur mit einem einzigen Drucksensor zu ermitteln. Mit Hilfe dieser multivariablen Sensor-Technologie lässt sich einerseits eine Vielzahl unterschiedlicher Messwerte aus dem Messsignal ermitteln und andererseits können zusätzliche Funktionen, wie die Diagnosefunktionen, Wartungsfunktionen, Analyse- und Bewertungsfunktionen zur Vorverarbeitung der Messwerte im multivariablen Sensor integriert sein.

Eine Ausgestaltungsart der mehrschichtigen Kommunikation wird durch eine Modulation eines zusätzlichen, digitalen HART-Signals auf ein analoges 420 mA-Stromsignal ausgeführt. Dies hat den Vorteil, dass die Netztopologie und ältere, analog kommunizierenden Feldgeräte in vorhandenen Kommunikationssystemen beibehalten werden können und nur geringfügige Änderungen an dem Leitsystem oder dem Kommunikationspartner vorgenommen werden müssen, da die beiden unterschiedlichen Kommunikationsarten, wie das digitale HART-Signal und das analoge Stromsignal, sich gegenseitig nicht beeinflussen. Durch die Integration der Ermittlung von verschiedenen Messgrößen in einem einzigen multivariablen Sensor wird die Anzahl der Feldgeräte, sowie deren Prozessanschlüsse in einer Prozessanlage verringert, infolgedessen die Kosten für Planung, Installation, Betrieb und Inbetriebnahme der multivariablen Sensoren in der Prozessanlage geringer ausfallen. Solche multivariablen Sensoren werden in verfahrenstechnischen Anlagen, wie z. B. in der chemischen Industrie, in der pharmazeutischen Industrie, in der NahrungsmittelIndustrie, in der Öl-Gas-Industrie und/oder im Ab-/Wasser-Bereich eingesetzt.

Auch rein digitale Feldbusgeräte sind auf dem Markt verfügbar, wobei es eine große Anzahl von verschiedenen Feldbus-Systemen gibt. Beispielhaft seien hier PROFIBUS DP, PROFIBUS PA, Foundation Fieldbus und CAN erwähnt. Alle bekannten Bussysteme haben ihren Einsatzbereich in speziellen Aufgaben- und Anwendungsbereichen. Aus diesem Grund gibt es eine Vielzahl von Feldgeräten für verschiedene Bussysteme, die im Allgemeinen nicht kompatibel gegen Feldgeräte eines anderen Bussystems ausgetauscht werden können. Feldbusgeräte können zwar vergleichsweise schnell über einen Feldbus Daten austauschen und bieten neue Diagnose- und Überwachungsmöglichkeiten, jedoch beschränkt sich ihr Einsatz auf meist völlig neu installierte Automationsanlagen, in denen ein neues digitales Prozessleitsystem aufgebaut wird. Dies ist der Grund, dass sich die Verbreitung von rein digital kommunizierenden Feldbusgeräten in der Prozessautomatisierungstechnik nur gemächlich durchsetzt. Ein großer Nachteil dieser rein digital kommunizierenden Feldbusgeräte ist, dass diese nicht in vorhandene Prozessanlagen mit einer analogen Kommunikation über Zweileiter-Technik nicht integriert werden können.

Damit die Kommunikation der Messwerte und Diagnose- und Überwachungswerte zwischen den intelligenten Einzelkomponenten, die in einer Prozessanlage örtlich verteilt sind, fehlerfrei funktioniert, ist es nötig dass die Kommunikationsschnittstellen aufeinander angepasst sind. Hierzu werden diese Schnittstellen sowie weitere Verarbeitungsmechanismen der einzelnen Feldkomponenten durch eine entsprechende Parametrisierung bei der Inbetriebnahme angepasst.

Damit multivariable Sensoren in bestehenden Prozessanlagen mit rein analog arbeitenden Leitsystemen eingesetzt werden können, sind Konverter auf dem Markt erhältlich, die das digitalen HART-Signal auslesen und in entsprechende Analogsignale in Form von Stromsignalen umsetzen. Derartige Konverter werden beispielsweise unter dem Namen TRI-LOOP von Rosemount Inc. und SPA von Moore Industries auf dem Markt vertrieben. Diese Konverter haben den Nachteil, dass bei der Inbetriebnahme des Kommunikationssystems die Konverter vorweg konfiguriert werden müssen. Dies hat für den Betreiber der Prozessanlagen den Nachteil, dass er zusätzliche Geräte konfigurieren muss, wobei bei der Eingabe der Parameter eine zusätzliche Fehlerquelle entstehen kann.

Aufgabe der vorliegenden Erfindung ist es, eine vereinfachte und sichere Parametrisierung von einzelnen Feldkomponenten eines Kommunikationssystems zu ermöglichen.

Diese Aufgabe wird erfindungsgemäß durch ein Verfahren zur Inbetriebnahme und/ oder zum Betrieb eines Kommunikationssystems bestehend aus zumindest einem multivariablen Sensor, aus zumindest einer Konvertereinheit und aus zumindest einer Empfangseinheit, die über eine Zweidrahtleitung miteinander verbunden sind, wobei von dem multivariablen Sensor ein Hauptmesswert als Analogsignal und Nebenmesswerte als aufmoduliertes, kodiertes Digitalsignal über die Zweidrahtleitung bereitgestellt werden, wobei von der Empfangseinheit nur Analogsignale empfangen werden, wobei die Nebenmesswerte im multivariablen Sensor mittels eines Umwandlungsalgorithmus' in Vorgabewerte umgewandelt werden, wobei zumindest die Vorgabewerte von der Konvertereinheit angefordert und empfangen werden, wobei aus den Vorgabewerten in der Konvertereinheit durch einen fest vorgegeben, unkonfigurierbaren Rückwandlungsalgorithmus entsprechende Analogsignale der Nebenmesswerte erzeugt werden, und wobei die Analogsignale der Nebenmesswerte jeweils über separate Stromleitungen an die Empfangseinheit übermittelt werden. Aufgrund dieses Verfahrens ist es möglich, dass bei der Inbetriebnahme nur die multivariablen Sensoren konfiguriert und parametrisiert werden müssen, da die Nebenmesswerte auf einen Vorgabewert umgewandelt werden. Da die Skalierung der Nebenmesswerte auf den Messbereich oder den Stromsignalbereich vollständig im multivariablen Sensor erfolgt, muss der Vorgabewert in der Konvertereinheit nur nach einem festen vorgegeben Rückumwandlungsalgorithmus in ein Stromsignal zurück gewandelt werden. Als Rückwandlungsalgorithmus wird meist eine einfach lineare Umsetzung des Zahlenwerts des Vorgabewerts in einen entsprechenden Strom umgesetzt, jedoch sind auch quadratische Umwandlung oder andere Arten von Umwandlungsalgorithmen einsetzbar. Der Rückwandlungsalgorithmus der Konvertereinheit muss jedoch bekannt sein, so dass bei der Konfiguration der multivariablen Sensoren dessen Umwandlungsalgorithmus entsprechend angepasst werden kann. Die Konvertereinheit muss bei der Inbetriebnahme des Kommunikationssystems nicht mehr konfiguriert werden, da diese zumindest nicht mehr vom Messbereich des multivariablen Sensors abhängig ist.

Gemäß einer Ausgestaltung des Verfahrens werden die Vorgabewerte als Absolutwerte umgewandelt. Der Absolutwert stellt einen Zahlenwert des auf den Messbereich skalierten Nebenmesswerts dar. Der Zahlenwert des Absolutwerts kann in der Konvertereinheit in Abhängigkeit vom Rückwandlungsfaktor des Rückwandlungsalgorithmus' direkt in einen entsprechenden Strom umgewandelt werden.

Gemäß einer weiteren Ausgestaltung des Verfahrens werden die Vorgabewerte als Relativwerte umgewandelt. Der Relativwert gibt den Anteil des Messbereichs wieder. Durch die angepasste Umwandlung mittels des Umwandlungsalgorithmus' im multivariablen Sensor wird der Messbereich auf den Strombereich der Konvertereinheit abgebildet.

Eine zweckmäßige Ausgestaltung des Verfahrens ist, dass in der Konvertereinheit erkannt wird, ob Absolutwerte oder Relativwerte empfangen werden. Falls von der Konvertereinheit bei Ihrer Anfrage an den multivariablen Sensor die Art des Vorgabewertes als Antwort nicht explizit vorgegeben wird, ist diese Abfrage notwendig, da dadurch die Art des Vorgabewertes bestimmt werden kann.

Gemäß einer vorteilhaften Ausführungsform des Verfahrens ist vorgesehen, dass die Relativwerte auf Prozentwerte im Verhältnisbereich von 0 bis 100 Prozent und/ oder die Absolutwerte auf Stromwerte im Strombereich zwischen 4 bis 20 mA umgewandelt werden. Der Relativwert stellt einen Anteil des einstellbaren Stromsbereichs des Analogsignals als Prozentwerte dar. Wird beispielsweise ein Relativwert von 50 Prozent übermittelt, so gibt die Konvertereinheit bei einer linearen Rückumwandlung einen Strom von 12 mA (Milliampere). Der Absolutwert gibt den Stromwert als Zahlenwert an, der die Konvertereinheit als Strom ausgeben soll.

Eine sehr vorteilhafte Variante des Verfahrens ist, dass die Relativwerte durch den Rückwandlungsalgorithmus in der Konvertereinheit linear in entsprechende Analogsignale umgewandelt werden.

Gemäß einer vorteilhaften Ausführungsform des Verfahrens ist vorgesehen, dass von der Konvertereinheit ein Fehlerzustand der Relativwerte oder ein Fehlerzustand in der Umwandlung Relativwerte in entsprechende Analogsignale erkannt wird. Werden Relativwerte außerhalb des Verhältnisbereichs von 0 bis 100 Prozent oder Absolutwerte außerhalb des Strombereichs von 420 mA von den multivariablen Sensoren an die Konvertereinheit übermittelt, so wird ein Fehler des Messwerts erkannt.

In einer vorteilhaften Ausführungsform des Verfahrens wird vorgeschlagen, dass im Fehlerzustand der Relativwerte ein entsprechendes Analogsignal von der Konvertereinheit über die separaten Stromleitungen an die Empfangseinheit übermittelt wird. Der Fehlerzustand wird über die Stromleitung an die Empfangseinheit bzw. an das Leitsystem durch einen Fehlerstrom von beispielsweise 3,6 mA oder 21,5 mA nach dem HART-Standard übermittelt.

Gemäß einer vorteilhaften Ausführungsform des Verfahrens werden im Fehlerzustand der Relativwerte entsprechende Fehlermeldungen als Digitalsignale und/oder Analogsignale von der Konvertereinheit über die Zweidrahtleitung an den multivariablen Sensor übermittelt. Ein Fehlerzustand der Relativwerte der Nebenmesswerte und/oder des Hauptmesswerts in der Konvertereinheit wird an den entsprechenden multivariablen Sensor übermittelt, und/oder es wird dementsprechend ein neuer Messzyklus durch die Konvertereinheit initiiert. Dieser Fehlerzustand der Relativwerte in der Konvertereinheit äußert sich beispielsweise so, dass ein Relativwert außerhalb des Bereichs von 0-100 % ermittelt wird.

Weiterhin wird vorgeschlagen, dass der Umwandlungsalgorithmus bei der Parametrisierung des multivariablen Sensors angepasst und/oder eingegeben wird. Durch die Anpassung des Umwandlungsalgorithmus' bei der Parametrisierung des multivariablen Sensors ist es möglich, die Umwandlung der Nebenmesswerte in Relativwerte oder Absolutwerte an den Messbereich des multivariablen Sensors und den Strombereich der Konvertereinheit anzupassen.

Weitere Merkmale und Vorteile der Erfindung ergeben sich aus der nachstehenden Beschreibung, in der der Aufbau und die Funktionsweise einer Ausführungsform gemäß der Erfindung anhand von schematischen Zeichnungen im Einzelnen erläutert ist. Zur Vereinfachung sind in den Zeichnungen identische Teile mit dem gleichen Bezugszeichen versehen worden.

Es zeigen:

Fig. 1 ein Blockschaltbild einer bevorzugten Ausführungsform eines erfindungsgemäßen Kommunikationssystems; und

Fig. 2 ein Ablaufdiagramm der Konvertierung des HART-Signals eines zweiten, dritten und/oder vierten Wertes in ein analoges Stromsignal in der erfindungsgemäßen Konvertereinheit.

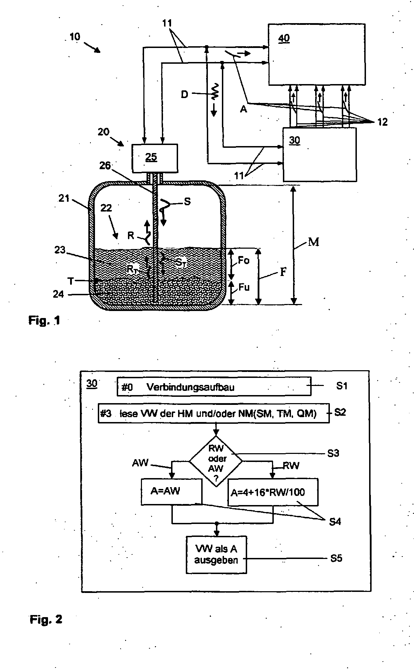

In Fig. 1 ist das Kommunikationssystem 10 aus einem multivariablen Sensor 20, einer Konvertereinheit 30 und einer Empfangseinheit 40, die über eine Zweidrahtleitung 11 miteinander verbunden sind, dargestellt. Der multivariable Sensor 20 ist in diesem Ausführungsbeispiel z.B. als ein Zeitbereichsreflektormeter bzw. TDR-Messsystem zur Ermittlung des kontinuierlichen Füllstandes F eines Füllguts 22 in einem Behälter 21 mit einem Oberflächenwellenleiter 26 und einem Messumformer 25 dargestellt. Das Verfahren ist jedoch auch mit allen anderen Arten von multivariablen Sensoren 20 oder Aktoren, die zusätzliche Daten, z.B. in Form von Nebenmesswerten NM, über die Zweidrahtleitung 11 beispielsweise nach dem HART-Standard als Digitalsignal D empfangen oder übertragen, durchführbar. Die Nebenmesswerte NM setzten sich nach dem HART-Standard grundlegend aus einem sekundärer Messwert SM, einem tertiärer Messwert TM und/oder ein quartärer Messwert QM zusammen.

Nach der Methode der geführten Mikrowelle bzw. der Zeitbereichsreflektormetrie oder der TDR-Messmethode (Time Domain Reflection) wird ein Hochfrequenzimpuls als Messsignal entlang eines Sommerfeldschen oder Goubauschen Wellenleiters oder entlang eines Koaxialwellenleiters ausgesendet. Bei einer Änderung der Dielektrizitätskonstanten des den Wellenleiter umgebenden Füllguts 22 wird ein Anteil der Energie des Messsignals zumindest teilweise zum Einkoppelbereich des Oberflächenwellenleiters 26 zurückreflektiert und von dem Messumformer 25 wieder empfangen. Aus der Zeitdifferenz zwischen dem Aussenden des Messsignals (Sendesignal S) und dem Empfang des reflektierten Messsignals (Reflektionssignals R) lässt sich die Laufzeit des Messsignals zwischen einem festen Punkt im Einkoppelbereich und der Oberfläche des Füllguts 22 ermitteln. Vorrichtungen und Verfahren zur Bestimmung des Füllstandes F über die Laufzeit von Hochfrequenzsignalen, sowie auch von anderen Messsignalen, wie z.B. Ultraschall nutzen die physikalische Gesetzmäßigkeit aus, wonach die Laufstrecke gleich dem Produkt aus der Laufzeit und der Ausbreitungsgeschwindigkeit des Messsignals ist. Unter Berücksichtigung der Geometrie des Behälters 21 lässt sich der Füllstand F des Füllguts 22 als relative oder absolute Größe ermitteln. Das FMCW-Verfahren (Frequency Modulated Continuous Waves), bei dem der Frequenzbereich eines kontinuierlichen Messsignal verändert und die Distanz durch die Frequenzdifferenz des ausgesendeten zum reflektierten Messsignal gemessen wird, ist im Zusammenhang mit dem obigen Laufzeit-Messprinzip ebenfalls ausführbar.

Die Ausbildung einer Trennschicht T des Füllguts 22 erfolgt bei zumindest zwei unterschiedlichen Medien 23, 24 im Behälter 21, die sich wie Wasser und Öl nicht vermischen. Um die Menge oder das Volumen beider Medien 23, 24 getrennt erfassen zu können, ist es erforderlich, den oberen Teilbereich des Füllstands $F_O$ des oberen Mediums 23, den unteren Teilbereich des Füllstands $F_U$ des unteren Mediums 24 oder die Trennschicht T zwischen den beiden Medien 23,24 zu erfassen. Bei der Trennschichtmessung wird zusätzlich zum Reflektionssignal R an der Oberfläche des oberen Mediums 23 ein weiteres Trennschicht-Reflektionssignal $R_T$ an der Trennschicht T zwischen dem oberen Medium 23 und dem unteren Medium 24 ermittelt. Mittels dieses Trennschicht-Reflektionssignals $R_T$ ist es möglich, den oberen Teilbereich des Füllstands $F_O$ eines oberen Mediums 23 und/oder den unteren Teilbereich des Füllstands $F_U$ eines unteren Mediums 24 zu bestimmen. Damit dieses Trennschicht-Reflektionssignal $R_T$ ermittelt werden kann, ist es notwendig, dass nicht die gesamte Energie des Sendesignals S an der Oberfläche des oberen Mediums 23 vollständig reflektiert wird, sondern ein Anteil des Sendesignals S als Trennschicht-Sendesignal $S_T$ in das obere Medium 23 transmittiert wird. Die Transmission und Reflexion des Sendesignals S und Trennschicht-Sendesignals $S_T$ hängt hauptsächlich von den Dielektrizitätskonstanten der zu messenden Medien 23,24 ab.

Damit der multivariable Sensor 20 an die Gegebenheiten des Prozesses und der Prozessanlage angepasst werden kann, muss dieser vor der Inbetriebnahme entsprechend konfiguriert und parametrisiert werden. Ein Bedienwerkzeug, beispielsweise in Form eines HART-Bediengeräts, dient hierbei zur Parametrierung, Konfigurierung und Diagnose sowie zur Unterstützung von Service- bzw. Waitungstätigkeiten, der Datenverwaltung und Dokumentation des multivariablen Sensors 20. Eine Konfigurierung der multivariablen Sensoren 20 ist vor Ort über entsprechende Bedientasten und ein Display am Messumformer 25 möglich, was in Fig. 1 nicht explizit gezeigt ist.

Aufgrund des erhöhten Informations- und Datenaufkommens von multivariablen Sensoren 20, unterstützen diese neben dem klassischen 420 mA-Stromsignal auch erweiterte mehrkanalige Kommunikationsprotokolle, wie beispielsweise das HART-Protokoll. Damit diese erweiterten Kommunikationsprotokolle in bestehende Prozessanlagen mit einer Empfangseinheit 40 bzw. einer Leitsystemeinheit mit ausschließlich analogen 420 mA-Stromsignal Schnittstellen eingesetzt werden können, müssen diese erweiterten Kommunikationsprotokolle, wie z.B. HART mit einem zusätzlich aufmodulierten Digitalsignal D in ein entsprechendes Analogsignal A, wie z.B. ein 420 mA-Stromsignal umgewandelt werden. Diese Umwandlung der beispielsweise digitalen HART-Signale in analoge 420 mA-Stromsignale wird mittels einer Konvertereinheit 30 durchgeführt. Diese Konvertereinheit 30 liest die Nebenmesswerte NM als Digitalsignale D, z.B. HART-Signale, auf der Zweidrahtleitung 11 zwischen dem multivariablen Sensor 20 und der Empfangseinheit 40 aus und gibt diese als entsprechende Analogsignale A, z.B. als 420 mA-Stromsignale, über zusätzliche Stromleitungen 12 an die Empfangseinheit 40 weiter. Die Umwandlung der Nebenmesswerte NM als Digitalsignale D in entsprechende Analogsignal A wird in der Konveitereinheit 30 umgesetzt.

Das HART-Protokoll arbeitet nach dem Master-Slave-Verfahren, wobei die Konvertereinheit 30 als ein Master von zwei möglichen Mastern in einem HART-Kommunikationssystem 10 und die Multivariablen Sensoren 20 als Slave des Kommunikationssystems 10 ausgebildet sind. Mit Hilfe vordefinierter Kommandos erteilt der Master Befehle an einen multivariablen Sensor 20 oder übermittelt Daten. So lassen sich Sollwerte, Istwerte und Parameter übertragen sowie verschiedene Dienste zur Inbetriebnahme und Diagnose abwickeln. Die multivariablen Sensor 20 antworten unmittelbar mit einem Bestätigungstelegramm, welches eventuell angeforderte Statusmeldungen und/oder Daten des multivariablen Sensors 20 enthält.

Die Aktivität der Kommunikation wird vom Master ausgehend gesteuert, d.h. die Konvertereinheit 40 sendet beispielsweise ein Anforderungssignal bzw. ein Kommando zur Ausgabe der Messwerte an den multivariablen Sensor 20, welcher den angeforderten Hauptmesswert HM als Analogsignal A und die Nebenmesswerte NM oder Status-Signale als Digitalsignale D über die Zweidrahtleitung 11 zurücksendet. Die Konvertereinheit 30 als Master kann durch ein Kommando den multivariablen Sensor 20 als Slave in einen so genannten Burst-Modus versetzen, so dass eine zyklische Antwort des Slaves zur Ausgabe des als einen auf den eingestellten Messbereich M skalierten Hauptmesswerts HM und Nebenmesswerte NM initiiert wird. Diese zyklische Antwort erfolgt solange, bis wiederum vom Master ein Abbruch-Kommando gesendet wird. Die Konfiguration der erfindungsgemäße Konvertereinheit 30 ist in der Art und Weise fest vorgegeben, dass diese die Nebenmesswerte der multivariablen Sensoren 20 über die Zweidrahtleitung 11 nur als digitale Relativwerte RW oder als digitale Absolutwerte AW anfordert. Die Nebenmesswerte NM werden in dem multivariablen Sensor 20 durch einen Umwandlungsalgorithmus in entsprechende digitale Absolutwert AW oder digitale Relativwerte RW von Analogsignalen A, die den Nebenmesswerten NW mit eine Umwandlungsfaktor entsprechen, umgewandelt. Der Umwandlungsfaktor wird bei der Konfiguration des multivariablen Sensors 20 durch die Eingabe des Messbereichs M der Nebenmesswerte NM, des Bereichs der Analogsignale A und der Einheit der Nebenmesswerte NM mittels des Umwandlungsalgorithmus' berechnet. Diese Relativwerte RW oder Absolutwerte AW werden von dem multivariablen Sensor 20 über die Zweidrahtleitung 11 an die Konvertereinheit 30 übertragen. Die Konvertereinheit 30 muss nicht mehr vom Bediener des Kommunikationssystems 10 durch die Eingabe von Messbereichen M und Einheiten konfiguriert werden, sondern setzt die digitalen Relativwerte RW oder digitalen Absolutwerte AW direkt und linear über einen Rückwandlungsalgorithmus in entsprechende Analogsignale A um. Über optionale Parametrisierungsschalter an der Konvertereinheit 30 lassen sich vorgegebene Konfigurationen und Parametrisierungsmodelle der Konvertereinheit 30 auswählen und einstellen. Diese Parametrisierungsschalter sind nicht explizit in den Zeichnungen gezeigt. Durch diese Parametrisierungsschalter ist es dem Anlagenbediener möglich die Konvertereinheit 30 so zu konfigurieren, dass nur die gewünschten Nebenmesswerte NM und/oder der Hauptmesswert HM in dem entsprechenden Format und der vorgesehenen Einheit von der Konvertereinheit 30 an die Empfangseinheit 40 übertragen wird. Als Standardeinstellung ist die Konvertereinheit 30 jedoch so eingestellt, dass diese die Nebenmesswerte NM in entsprechende Relativwerte RW oder Absolutwerte AW des Schleifenstroms umwandelt.

Diese durch die Rückwandlung in der Konvertereinheit 30 erzeugten Analogsignale A der Nebenmesswerte NM werden über separate Stromleitungen 12 an die Empfangseinheit 40 weiter geleitet. Bei der Empfangseinheit 40 handelt es sich beispielsweise um ein Leitsystem (DCS - Distributed Control System) oder eine Speicherprogrammierbare Steuerung (SPS, PLC).

In einem auf Sicherheit ausgelegten Kommunikationssystem 1 wird der Hauptmesswert HM zusätzlich zum Analogsignal A in Form eines 420 mA-Stromsignals als Digitalsignal D in Form des sekundären Messwerts SM übertragen. Das hat den Vorteil, dass der Hauptmesswert HM auf zweierlei Arten übermittel wird und in der Empfangseinheit 40 eine Kontrolle der beiden Arten der Übermittlung gemacht werden kann. Gleichzeitig ist es möglich durch diese zusätzliche Kontrollfunktion die Umwandlung der Nebenmesswerte NM in Absolutwerte AW oder Relativwerte RW durch den Umwandlungsalgorithmus zu überprüfen oder die Stromausgänge der Stromleitungen 12 der Konvertereinheit zu kalibrieren.

In Fig. 2 ist ein Bearbeitungszyklus des Rückwandlungsalgorithmus' der Konvertereinheit 30 skizziert. In einem ersten Verfahrensschritt S 1 wird über das HART- Kommando #0 die Kommunikationsverbindung der Konvertereinheit 30 zu dem multivariablen Sensor 20 initialisiert. In diesem Initialisierungsschritt wird die Verbindung zu den multivariablen Sensoren 20 aufgebaut, in dem Parameter ausgelesen und Testroutinen durchgeführt werden.

Im zweiten Verfahrensschritt S2 fordert die Konvertereinheit 30 einen multivariablen Sensor 20 durch Übermittlung eines HART- Kommandos, z.B. HART-Kommando #3 auf, den Hauptmesswert HM als Analogsignal A in Form von einem 420 mA-Stromsignal und die Nebenmesswerten NM auf die Zweidrahtleitung 11 auszugeben. Insgesamt werden von jedem multivariablen Sensor 20 bis zu drei Nebenmesswerte NM bzw. Variablen im Floating Point Format geliefert. Die Nebenmesswerte NM können über das HART- Kommando #51 vordefiniert werden. Diese Nebenmesswerte NM werden von der Konvertereinheit 30 empfangen. Der Absolutwert AW ist in diesem Ausführungsbeispiel ein Zahlenwert, der einem Stromwert des Analogsignals A in mA (Milliampere) entspricht. Der Relativwert RW gibt den Anteil des Änderungsbereichs des Analogsignals A in Prozent an.

Durch Überprüfung der übermittelten Einheiten der Nebenmesswerte NM wird in einem dritten Verfahrenschritt S3 festgestellt, ob es sich um Relativwerte RW mit der Einheit in Prozent oder Absolutwerte AW mit der Einheit in mA handelt. Ist ein Absolutwert AW übermittelt worden, so wird der Zahlenwert des Absolutwerts AW direkt in einen entsprechenden Strom als Analogsignal A umgesetzt. Ist hingegen ein Relativwert RW übermittelt worden, so wird der Strom als Analogsignal A in der Art und Weise erzeugt, dass durch den Relativwert RW der prozentuale Anteil des Variationsbereichs des Stroms ermittelt wird. Dieser prozentuale Anteil des Stroms wird zu einem Mindeststromwert von beispielsweise 4 mA (Milliampere) hinzuaddiert und ergibt einen entsprechenden Strom als Ausgangssignal A. Die Umrechnung der Relativwerte RW in einen entsprechenden Strom als Analogsignal A wird durch folgende Gleichung beschrieben:

$$A[mA] = 4mA + \frac{16mA \cdot RW}{100}$$

.

Im fünften Verfahrensschritt S5 wird der eingestellte Strom als Analogsignal A auf den entsprechenden Stromleitungen 12 ausgegeben. Bei der Stromleitungen 12 handelt es sich allgemein um analoge Zweileiter-Leitungen. Da die Konvertereinheit 30 unkonfigurierbar ausgeführt ist, wird die Zuordnung der einzelnen Stromleitungen 12 zu den entsprechenden Nebenmesswerten NM fest vorgegeben. So wird beispielsweise an der ersten Stromleitung 12 der sekundäre Messwert SM, an der zweiten Stromleitung 12 der tertiäre Messwert TM und an der dritten Stromleitung 12 der quartäre Messwert QM als Analogsignal in Form eines 420 mA-Stromsignals ausgegeben.Bezugszeichenliste

10 Kommunikationssystem
11 Zweidrahtleitung
12 Stromleitungen
20 multivariable Sensoren
21 Behälter
22 Füllgut
23 oberes Medium
24 unteres Medium
25 Messumformer
26 Oberflächenwellenleiter
30 Konvertereinheit
40 Empfangseinheit
A Analogsignal
D Digitalsignal
S Sendesignal
$S_T$ Trennschicht-Sendesignal
R Reflektionssignal
$R_T$ Trennschicht-Reflektionssignal
HM Hauptmesswert
NM Nebenmesswert
SM sekundärer Messwert
TM tertiärer Messwert
QM quartärer Messwert
VW Vorgabewert
AW Absolutwert
RW Relativwert
F Füllstand
$F_O$ oberer Teilbereich des Füllstands
$F_U$ unterer Teilbereich des Füllstands
M Messbereich
T Trennschicht
S1 erster Verfahrensschritt
S2 zweiter Verfahrensschritt

S3 dritter Verfahrensschritt

S4 vierter Verfahrensschritt

S5 fünfter Verfahrensschritt

**Patentansprüche**

1. 1. Verfahren zur Inbetriebnahme und/oder zum Betrieb eines Kommunikationssystems (10) bestehend aus zumindest einem multivariablen Sensor (20), aus zumindest einer Konvertereinheit (30) und aus zumindest einer Empfangseinheit (40), die über eine Zweidrahtleitung (11) miteinander verbunden sind, wobei von dem multivariablen Sensor (20) ein Hauptmesswert (HM) als Analogsignal (A) und Nebenmesswerte (NM) als aufmoduliertes, kodiertes Digitalsignal (D) über die Zweidrahtleitung (11) bereitgestellt werden, wobei von der Empfangseinheit (40) nur Analogsignale (A) empfangen werden, wobei die Nebenmesswerte (NM) im multivariablen Sensor (20) mittels eines Umwandlungsalgorithmus' in Vorgabewerte (VW) umgewandelt werden, wobei zumindest die Vorgabewerte (VW) von der Konvertereinheit (30) angefordert und empfangen werden, wobei aus den Vorgabewerten (VW) in der Konvertereinheit (30) durch einen fest vorgegeben, unkonfigurierbaren Rückwandlungsalgorithmus entsprechende Analogsignale (A) der Nebenmesswerte (NM) erzeugt werden, und wobei die Analogsignale (A) der Nebenmesswerte (NM) jeweils über separate Stromleitungen (12) an die Empfangseinheit (40) übermittelt werden.

2. 2. Verfahren nach Anspruch 1, wobei die Vorgabewerte (VW) als Absolutwerte (AW) umgewandelt werden.

3. 3. Verfahren nach Anspruch 1, wobei die Vorgabewerte (VW) als Relativwerte (RW) umgewandelt werden.

4. 4. Verfahren nach Anspruch 2 oder 3, wobei in der Konvertereinheit (30) anhand der Einheit der Nebenmesswerte NM erkannt wird, ob Absolutwerte (AW) oder Relativwerte (RW) empfangen werden.

5. 5. Verfahren nach Anspruch 1, 2, 3 oder 4, wobei die Relativwerte (RW) auf Prozentwerte im Verhältnisbereich von 0 bis 100 Prozent und/oder die Absolutwerte (AW) auf Stromwerte im Strombereich zwischen 4 bis 20 mA umgewandelt werden.

6. 6. Verfahren nach Anspruch 1, 2, 3 oder 5, wobei die Relativwerte (RW) durch den Rückwandlungsalgorithmus in der Konvertereinheit (30) linear in entsprechende Analogsignale (A) umgewandelt werden.

7. 7. Verfahren nach Anspruch 1, 3, 4 oder 6, wobei von der Konvertereinheit (30) ein Fehlerzustand der Relativwerte (RW) oder ein Fehlerzustand in der Umwandlung Relativwerte (RW) in entsprechende Analogsignale (A) erkannt wird.

8. 8. Verfahren nach Anspruch 7, wobei im Fehlerzustand der Relativwerte (RW) entsprechende Fehlermeldung als Analogsignale (A) von der Konvertereinheit (30) über die separaten Stromleitungen (12) an die Empfangseinheit (40) übermittelt wird.

9. 9. Verfahren nach Anspruch 7 oder 8, wobei im Fehlerzustand der Relativwerte (RW) entsprechende Fehlermeldung als Digitalsignale (D) und/oder Analogsignale (A) von der Konvertereinheit (30) über die Zweidrahtleitung (11) an den multivariablen Sensor (20) übermittelt werden.

10. 10. Verfahren nach Anspruch 1, wobei der Umwandlungsalgorithmus bei der Parametrisierung des multivariablen Sensors (20) angepasst und/oder eingegeben wird.

**Claims**

1. Process for commissioning and/or operating a communication system (10), consisting of at least one multivariable sensor (20), at least one converter unit (30) and at least one receiver unit (14), all of which being connected via a two-wire cable (11). The system is **characterized in that** the multivariable sensor (20) provides a primary value (HM) as an analog signal (A) and secondary values (NM) as a modulated, encoded digital signal (D) via the two-wire cable (11), and **in that** the receiver unit (40) only receives analog signals (A), and **in that** the secondary values (NM) in the multivariable sensor (20) are converted to default values (VW) by means of a conversion algorithm. The default values (VW) at least are requested and received by the converter unit (30) and analog signals (A) of the secondary values (NM) are generated from the default values (VW) in the converter unit (30) using a fixed, non-configurable reconversion algorithm, said analog signals (A) of the secondary values (NM) being transmitted to the receiver unit (40) via separate power lines (12).

2. Process as per Claim 1, where the default values (VW) are converted as absolute values (AW).

3. Process as per Claim 1, where the default values (VW) are converted as relative values (RW).

4. Process as per Claim 2 or 3, where, in the converter unit (30), the unit of the secondary values (NM) is used to determine whether absolute values (AW) or relative values (RW) are received.

5. Process as per Claim 1, 2, 3 or 4, where the relative values (RW) are converted to percentage values in the range from 0% to 100% and/or the absolute values (AW) are converted to current values in the current range between 4 and 20 mA.

6. Process as per Claim 1, 2, 3 or 5, where the relative values (RW) are linearly converted to corresponding analog signals (A) in the converter unit (30) by means of the reconversion algorithm.

7. Process as per Claim 1, 3, 4 or 6, where the converter unit (30) detects errors in the relative values (RW) or detects errors when converting relative values (RW) to the corresponding analog signals (A).

8. Process as per Claim 7, where, in the event of faulty relative values (RW), an appropriate error message is sent as analog signals (A) from the converter unit (30) to the receiver unit (40) via the separate power lines (12).

9. Process as per Claim 7 or 8, where, in the event of faulty relative values (RW), an appropriate error message is transmitted as digital signals (D) and/or analog signals (A) from the converter unit (30) to the multivariable sensor (20) via the two-wire cable (11).

10. Process as per Claim 1, where the conversion algorithm is adapted and/or entered when configuring the multivariable sensor (20).

**Revendications**

1. Procédé destiné à la mise en service et/ou au fonctionnement d'un système de communication (10) constitué d'au moins un capteur multivariable 20), d'au moins une unité de conversion (30) et d'au moins une unité de réception (40), qui sont reliés entre eux à travers une ligne bifilaire (11), procédé pour lequel sont mises à disposition par le capteur multivariable (20), une valeur de mesure principale (HM) en tant que valeur analogique (A) et des valeurs de mesure secondaires (NM) en tant que signal numérique (D) codé et modulé, par l'intermédiaire de la ligne bifilaire (11), procédé pour lequel sont reçus par l'unité de réception (40) uniquement des signaux analogiques (A), les valeurs de mesure secondaires (NM) du capteur multivariable (20) étant converties en valeurs de consigne (VW) au moyen d'un algorithme de conversion, les valeurs de consigne (VW) étant au minimum demandées et reçues par l'unité de conversion (30), des signaux analogiques (A) correspondant aux valeurs de mesure secondaires (NM) étant générés à partir des valeurs de consignes (VW) dans l'unité de conversion (30) au moyen d'un algorithme de reconversion prédéfini, non configurable, et les signaux analogiques (A) des valeurs de mesure secondaires (NM) étant respectivement transmis à l'unité de réception (40) par le biais de lignes de courant (12) séparées.

2. Procédé selon la revendication 1, pour lequel les valeurs de consignes (VW) sont converties en tant que valeurs absolues (AW).

3. Procédé selon la revendication 1, pour lequel les valeurs de consignes (VW) sont converties en tant que valeurs relatives (RW).

4. Procédé selon la revendication 2 ou 3, pour lequel il est détecté, dans l'unité de conversion (30), au moyen de l'unité des valeurs de mesure secondaires (NM), si les valeurs reçues sont des valeurs absolues (AW) ou des valeurs relatives (RW).

5. Procédé selon la revendication 1, 2, 3 ou 4, pour lequel les valeurs relatives (RW) sont converties en pourcentages dans la plage comprise entre 0 et 100 pour-cent et/ou les valeurs absolues (AW) sont converties en valeurs de courant dans la plage comprise entre 4 et 20 mA.

6. Procédé selon la revendication 1, 2, 3 ou 5, pour lequel les valeurs relatives (RW) sont converties en signaux analogiques (A) correspondants au moyen d'un algorithme de reconversion dans l'unité de conversion (30).

7. Procédé selon la revendication 1, 3, 4 ou 6, pour lequel un état d'erreur des valeurs relatives est détecté par l'unité de conversion (30) ou un état d'erreur est détecté dans la conversion des valeurs relatives (RW) en signaux analogiques (A) correspondants.

8. Procédé selon la revendication 7, pour lequel, dans l'état d'erreur des valeurs relatives (RW), un message d'erreur correspondant est transmis par l'unité de conversion (30) à l'unité de réception (40) en tant que signaux analogiques (A) par l'intermédiaire de lignes de courant (12) séparées.

9. Procédé selon la revendication 7 ou 8, pour lequel, dans l'état d'erreur des valeurs relatives (RW), un message d'erreur correspondant est transmis par l'unité de conversion (30) au capteur multivariable (20) en tant que signaux numériques (D) et/ou en tant que signaux analogiques (A) par l'intermédiaire de la ligne bifilaire (11).

10. Procédé selon la revendication 1, pour lequel l'algorithme de conversion est adapté et/ou entré lors de la paramétrisation du capteur multivariable (20).

Fig. 1

Fig. 2